# EUROPÄISCHE PATENTSCHRIFT

(11) **EP 2 852 273 B1**
(45) Veröffentlichungstag und Bekanntmachung des Hinweises auf die Patenterteilung: **06.07.2016**
(21) Anmeldenummer: 13730468.9
(22) Anmeldetag: 16.05.2013
(51) Int. Cl.: A01F 12/10, A01D 61/00, B65G 19/06, B65G 19/24

(54) **SCHRÄGFÖRDERER FÜR MÄHDRESCHER**
INCLINED FEEDER FOR COMBINE HARVESTERS
CONVOYEUR D'ALIMENTATION OBLIQUE POUR MOISSONNEUSES-BATTEUSES

(30) Priorität: 21.05.2012 DE 102012009979
(43) Veröffentlichungstag der Anmeldung: 01.04.2015
(73) Patentinhaber: Arnold Jäger Holding GmbH, 30625 Hannover (DE)
(72) Erfinder: MULDER, Jan-Harm, 7751 DN Dalen (NL); OORD, Johan, 9717 KV Groningen (NL); JÄGER, Sebastian, 30657 Hannover (DE)
(74) Vertreter: Bremer, Ulrich
(86) Internationale Anmeldenummer: PCT/DE2013/100179
(87) Internationale Veröffentlichungsnummer: WO 2013/174369

(56) Entgegenhaltungen:
- DE-A1-102005 027 841
- US-A- 3 555 790
- US-A- 3 589 502
- US-A- 4 712 668
- US-A1- 2004 250 523

## Beschreibung

Die vorliegende Erfindung betrifft einen Schrägförderer für Mähdrescher gemäß dem Oberbegriff des Anspruchs 1.

Mähdrescher sind mit einem Vorsatzgerät ausgerüstet, welche eine Haspel zum Erfassen des Ernteguts und eine hinter der Haspel angeordnete Querförderschnecke aufweist, die das Erntegut verdichtet und zur Mitte hin zu einem Schrägförderer fördert. Dieser ist in einem Kanal angeordnet und fördert das Erntegut in eine Dreschvorrichtung des Mähdreschers.

Gattungsgemäße Schrägförderer für Mähdrescher sind aus dem Stand der Technik hinreichend bekannt, so z. B. aus der DE 1199039, der US-A 3555790, der DE 4132246 A1, der DE 4311054 C2, der DE 102009036104 B4, der EP 1733607 B1 und der DE 102005027841 A1. Diese Schrägförderer weisen mindestens zwei parallel zueinander verlaufende, endlose Zugmittel auf, die durch quer zur Förderrichtung angeordnete Mitnehmerleisten miteinander verbunden sind, wobei die Mitnehmerleisten das Erntegut in einem unterschlächtigen Förderkanal einer Drescheinheit des Mähdreschers zuführen. Die Mitnehmerleisten sind durch Verschraubung mit den Zugmitteln verbunden.

Die endlosen Zugmittel laufen in einem Förderkanal um, dessen Stirnseiten zur Haspel bzw. zur Drescheinheit hin offen sind, der aber ansonsten allseitig geschlossen ist. Der Förderkanal ist durch einen Zwischenboden, der zwischen dem Obertrum und dem Untertrum der Zugmittel angeordnet ist und sich über einen großen Teil der Länge des Förderkanals erstreckt, in einen unterschlächtigen Förderkanal und einen oberschlächtigen Rücklaufkanal unterteilt.

Nach dem Stand der Technik werden als Mitnehmerleisten nicht wärmebehandelte Standardstahlprofile, wie U-, L- und T-Profile eingesetzt. Diese Mitnehmerleisten haben eine geringe Profilhöhe und eine begrenzte Förderwirkung aufgrund ihres geringen Formwiderstandes gegenüber dem Erntegut. Zudem sind die Profile sehr glatt und haben daher einen sehr geringen Reibschluss mit dem Erntegut. Aufgrund der Reibung des Ernteguts am Boden des Förderkanals und der mäßigen Mitnahmewirkung der Mitnehmerleisten kommt es im Betrieb zu einer beträchtlichen Geschwindigkeitsdifferenz zwischen den Mitnehmerleisten und dem Erntegutstrom (Schlupf). Daraus resultieren ein hoher Energieverbrauch, ein hoher Verschleiß, eine hohe Zugmittellbelastung sowie ein vorzeitiger Drescheffekt.

Aus dem Stand der Technik ist es bekannt, den oben beschriebenen Schlupf zwischen den Mitnehmerleisten und dem Erntegutstrom durch aerodynamische Maßnahmen zu beseitigen, zumindest aber zu verringern. So wird in der US-A 3555790 ein Mähdrescher beschrieben, bei dem ein am Ausgang des Förderkanals des Schrägförderers angeordneter Dreschzylinder so umgestaltet ist, dass er als Ventilator wirkt und somit eine Saugwirkung auf das im Förderkanal befindliche Erntegut ausübt.

In der EP 1 733 607 B1 ist eine ähnliche Lösung beschrieben. Die als Zugmittel eingesetzten Ketten dieses Schrägförderers laufen über eine untere Zugmittelführung und eine obere Zugmittelführung um. Die obere Zugmittelführung weist eine Antriebswelle auf, auf der zum Antrieb der Ketten Kettenräder drehfest sitzen. Zwischen den Kettenrädern ist eine Trommel auf der Antriebswelle angeordnet, deren Mantel mit Leisten oder

Stiften versehen ist. Aufgrund dieser Ausbildung übt die obere Zugmittelführung ebenfalls eine Saugwirkung auf das im Förderkanal befindliche Erntegut aus, wodurch die Geschwindigkeitsdifferenz zwischen den Mitnehmerleisten und dem Erntegutstrom verringert wird.

Aufgabe der Erfindung ist es, einen weiteren gattungsgemäßen Schrägförderer für Mähdrescher zur Verfügung zu stellen, bei dem die Geschwindigkeitsdifferenz zwischen den Mitnehmerleisten und dem Erntegutstrom durch zusätzliche Beschleunigung des Erntegutstroms beseitigt, zumindest aber verringert wird.

Diese Aufgabe wird erfindungsgemäß mit einem Schrägförderer gelöst, der die Merkmale des Anspruchs 1 aufweist.

Aufgrund der mindestens 30 % großen Überdeckung des kleinsten lichten Querschnitts des unterschlächtigen Förderkanals durch die Mitnehmerleisten wirken diese wie ein Ventilator und erzeugen einen Unterdruck am Eingang des Förderkanals. Das Erntegut wird dadurch zusätzlich beschleunigt und die Förderwirkung der Mitnehmerleisten aerodynamisch unterstützt. Dadurch ist es möglich, bei gleicher Förderleistung die Bandgeschwindigkeit und damit den Energieverbrauch und den Verschleiß zu verringern. Aufgrund der Verringerung des Schlupfes zwischen dem Erntegut und den Mitnehmerleisten kommt es zu einer schonenderen Förderung des Ernteguts und weniger Bruchkorn und zu einer Verminderung des vorzeitigen Dreschens.

In vorteilhafter Ausgestaltung der Erfindung wird der relativ große Querschnitt der Mitnehmerleisten dadurch realisiert, dass anstelle der aus dem Stand der Technik bekannten schweren Standardstahlprofile Stäbe mit rundem Querschnitt eingesetzt werden. Stäbe mit einem derartigen Querschnitt nehmen die im Betrieb des Schrägförderers auf sie einwirkenden Biegemomente und Torsionsmomente in idealer Weise auf, obwohl sie im Vergleich zu den Standardstahlprofilen leicht bauen.

Wenn nur ein runder Stab pro Mitnehmerleiste vorgesehen ist, ist es erforderlich, dass dieser mit einer friktionserhöhenden Ummantelung versehen ist, um zum einen den Förderquerschnitt der Mitnehmerleiste zu erhöhen und zum anderen, um den Reibschluss mit dem Erntegut und damit die Mitnahmewirkung zu verbessern.

Anstelle nur eines Stabes mit rundem Querschnitt können die Mitnehmerleisten auch mindestens zwei Stäbe mit rundem Querschnitt aufweisen, die im Förderstrom übereinander angeordnet und als Einzelstäbe mit dem Zugmittel verbunden sind. Diese mindestens zwei Stäbe können ebenfalls mit einer friktionserhöhenden Ummantelung versehen sein, um den Förderquerschnitt und die Mitnahmewirkung auf das Erntegut zu erhöhen.

Weitere vorteilhafte Ausgestaltungen der Erfindung ergeben sich aus den übrigen Unteransprüchen.

Die Erfindung wird nachstehend anhand von Ausführungsbeispielen näher erläutert. In der dazugehörigen Zeichnung zeigt:
- Fig. 1: eine schematische Seitenansicht eines Mähdreschers mit Mäheinheit und Schrägförderer,
- Fig. 2: einen perspektivischen Blick in den Förderkanal des Schrägförderers mit Mitnehmerleisten gemäß einer ersten Ausführungsform der Erfindung,
- Fig. 3: einen Querschnitt einer Mitnehmerleiste gemäß Fig. 2,
- Fig. 4: einen Darstellung gemäß Fig. 3 in einer zweiten Ausführungsform der Erfindung.
- Fig. 5: einen perspektiven Blick auf die Verbindungstelle zwischen einem Zugmittel und einer Mitnehmerleiste gemäß einer dritten Ausführungsform der Erfindung, und
- Fig. 6: einen perspektivischen Blick auf eine Mitnehmerleiste gemäß einer vierten Ausführungsform der Erfindung.

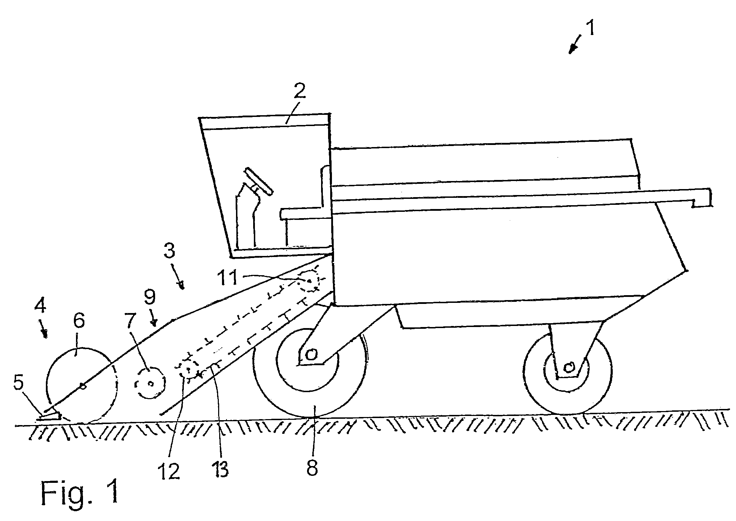

Fig. 1 zeigt einen selbstfahrenden Mähdrescher 1. Unterhalb der Fahrerkabine 2 erstreckt sich ein Schrägförderer 3 nach vorn unten. Er trägt an seinem vorderen Ende eine Mäheinheit 4, bestehend aus einem Mähbalken 5, einer Haspel 6 und einer Querförderschnecke 7. Die Mäheinheit 4 ist wesentlich breiter als der Mähdrescher 1 und erstreckt sich üblicherweise quer über dessen vordere Antriebsräder 8 hinaus, während der Schrägförderer 3 schmaler ist. Das Erntegut wird von dem Mähbalken 5 abgeschnitten, von der Haspel 6 erfasst und der Querförderschnecke 7 zugeführt. Die Querförderschnecke 7 fördert und verdichtet das Erntegut zur Mitte hin und führt es dem Schrägförderer 3 zu, der in einem Kanal 9 angeordnet ist.

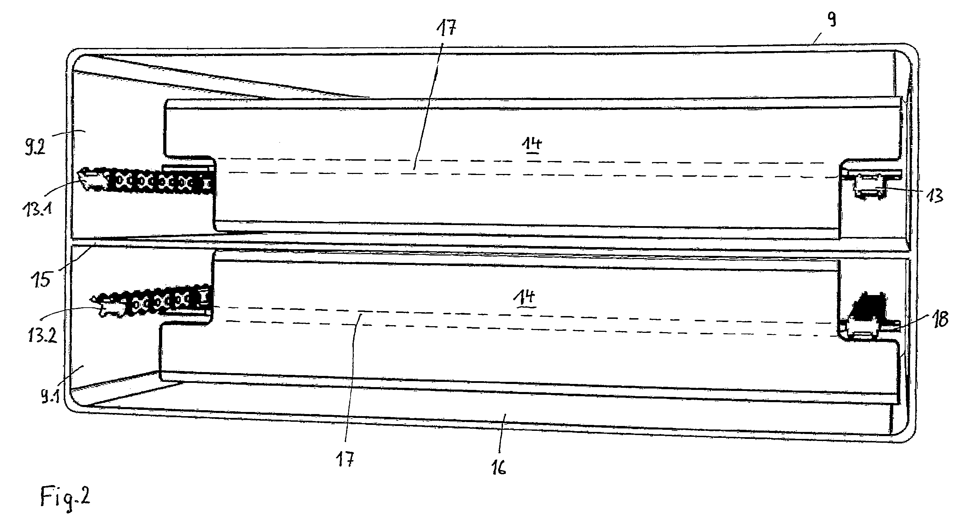

Wie am Besten aus Fig. 2 ersichtlich ist, umfasst der Schrägförderer 3 zwei parallel zueinander verlaufende, endlose Zugmittel 13, die durch quer zur Förderrichtung angeordnete Mitnehmerleisten 14 miteinander verbunden sind. Die Zugmittel 13 laufen um eine obere Zugmittelführung 11 und eine untere Zugmittelführung 12 im Kanal 9 um, wobei die obere Zugmittelführung 11 angetrieben ist und die untere Zugmittelführung 12 mitläuft. Zwischen dem Obertrum 13.1 und dem Untertrum 13.2 des Zugmittels 13 ist als Trennmittel ein Zwischenboden 15 angeordnet, der den Kanal 9 in einen unterschlächtigen Förderkanal 9.1 und einen oberschlächtigen Rücklaufkanal 9.2 unterteilt. Der Schrägförderer 3 fördert das Erntegut auf einer Bodenwand 16 des Förderkanals 9.1 einer nicht dargestellten Drescheinheit des Mähdreschers 1 zu.

In den Ausführungsbeispielen ist das Zugmittel 13 eine Rollenkette. Anstelle einer Rollenkette kann als Zugmittel 13 auch ein Nockenriemen eingesetzt werden, der aus einem mit zugfesten Einlagen verstärktem Polymer besteht. Dies hat den Vorteil, dass ein Längen des Zugmittels 13 durch Verschleiß und damit ein Schleifen der Mitnehmerleisten 14 an den Kanalwänden vermieden wird.

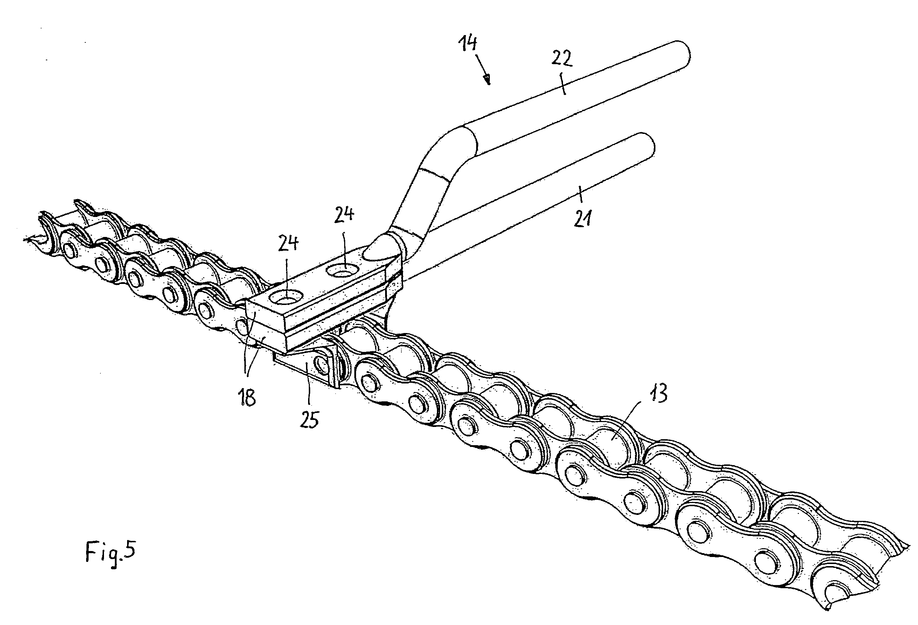

In dem Ausführungsbeispiel gemäß Fig. 2 weisen die Mitnehmerleisten 14 einen Stab 17 mit rundem Querschnitt auf. An seinen Enden ist der Stab 17 jeweils mit einer Abflachung 18 versehen, die der Befestigung des Stabes 17 an dem Zugmittel 13 dient. Diese Befestigung wird weiter unten anhand des Ausführungsbeispiels gemäß Fig. 5 noch näher erläutert.

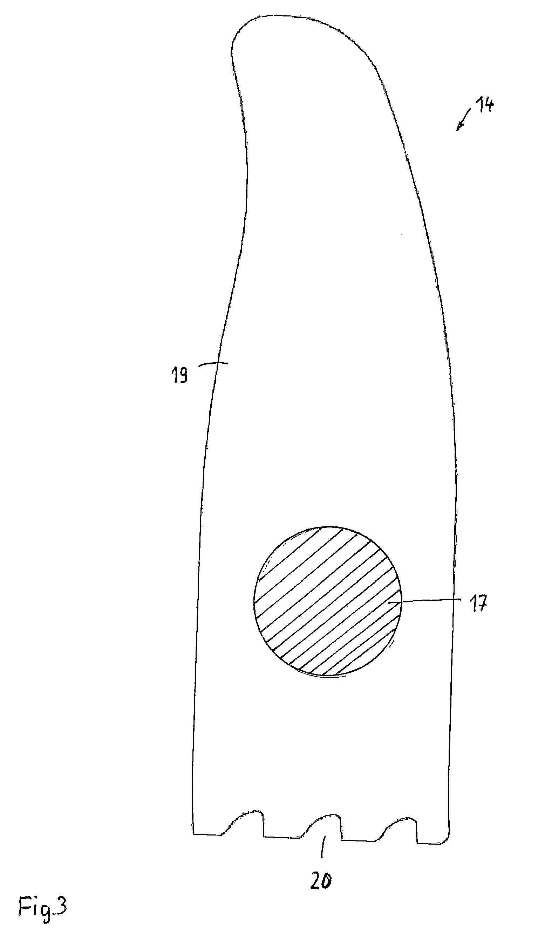

Fig. 3. zeigt einen Querschnitt eines Mitnehmers 14 gemäß dem Ausführungsbeispiel nach Fig. 2. Aus dieser Abbildung ist zu erkennen, dass der Stab 17 eine Ummantelung 19 aufweist, die die Form eines etwa senkrecht zu der Förderebene stehenden Flügels hat. Die Ummantelung 19 besteht aus einem Material mit einem hohen Reibungsbeiwert, z. B. aus Gummi. Durch diese Ummantelung 19 wird der Reibschluss der Mitnehmerleisten 14 mit dem Erntegut und damit der Mitnahmeeffekt verbessert. In einer der Bodenwand 16 zugewandten Stirnfläche sind Rillen 20 vorgesehen, die auch zur Verbesserung des Mitnahmeeffekts beitragen sollen.

Aus der Darstellung gemäß Fig. 2 ist zu ersehen, dass der Querschnitt jeder Mitnehmerleiste 14 in Förderrichtung gesehen mehr als 50 % des lichten Querschnitts des unterschlächtigen Förderkanals 9.1 ausfüllt.

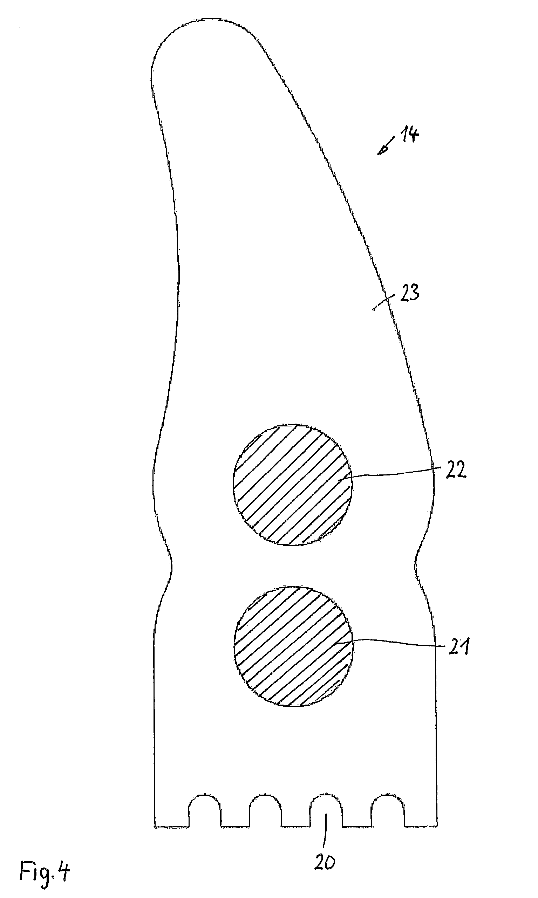

Fig. 4 zeigt einen Querschnitt durch eine Mitnehmerleiste 14 in einer weiteren Ausführungsform der Erfindung. Diese Mitnehmerleiste 14 weist zwei Stäbe 21, 22 mit rundem Querschnitt auf, die in Fig. 5 dargestellt sind. Im Gegensatz zu der Darstellung gemäß Fig. 5 besitzen die beiden Stäbe 21, 22 eine gemeinsame Ummantelung 23, die aus einem friktionserhöhenden Material, z. B. Gummi, besteht. Diese Mitnehmerleiste 14 hat ebenfalls wieder die Form eines etwa senkrecht zu der Förderebene stehenden Flügels. Mit dieser Mitnehmerleiste 14 wird eine gleich große Überdeckung des lichten Querschnitts des unterschlächtigen Förderkanals 9.1 erreicht, wie bei der Ausführungsform gemäß Fig. 3.

In dem Ausführungsbeispiel gemäß Fig. 5 bestehen die Mitnehmerleisten 14, wie bei dem vorstehend erläuterten Ausführungsbeispiel, aus zwei Stäben 21, 22 mit rundem Querschnitt. An ihren Enden sind die Stäbe 21, 22 jeweils mit einer Abflachung 18 versehen, die der Befestigung der Stäbe 21, 22 an dem Zugmittel 13 dienen. Dazu sind die Abflachungen 18 mit zwei voneinander beabstandeten Durchgangslöchern 24 versehen. Zum Befestigen der Stäbe 21, 22 an dem Zugmittel 13 werden die Abflachungen 18 so aufeinandergelegt, dass ihre Durchgangslöcher 24 miteinander fluchten. An den Befestigungsstellen liegen die Abflachungen 18 auf an dem Zugmittel 13 befestigten Flanschblechen 25 auf, die jeweils mit einem aus der Zeichnung nicht ersichtlichen Durchgangsloch versehen sind, deren Abstand voneinander dem der Durchgangslöcher 24 der Abflachungen 18 entspricht. Zur Befestigung der Stäbe 21, 22 an dem Zugmittel 13 werden in der Zeichnung nicht dargestellte Niete durch die fluchtenden Durchgangslöcher 24 der Abflachungen 18 und der Flanschbleche 25 hindurchgesteckt und vernietet. Anstelle einer Nietverbindung kann natürlich auch eine Schraubverbindung Anwendung finden.

In dem Ausführungsbeispiel gemäß Fig. 5 ist der Stab 21 gerade ausgeführt, während der Stab 22 in den Erntegutstrom abgekröpft ist. Die Stäbe 21, 22 sind aus kalt gezogenem oder warm gewalztem und vergütetem Draht hergestellt. Sie können auch ganz oder teilweise aus einem Faserverbundwerkstoff hergestellt sein. Um die Mitnehmerleisten 14 noch leichter zu gestalten, können die Stäbe 21, 22 auch als Hohlstäbe ausgeführt sein. Das gilt auch für die Stäbe der anderen Ausführungsbeispiele.

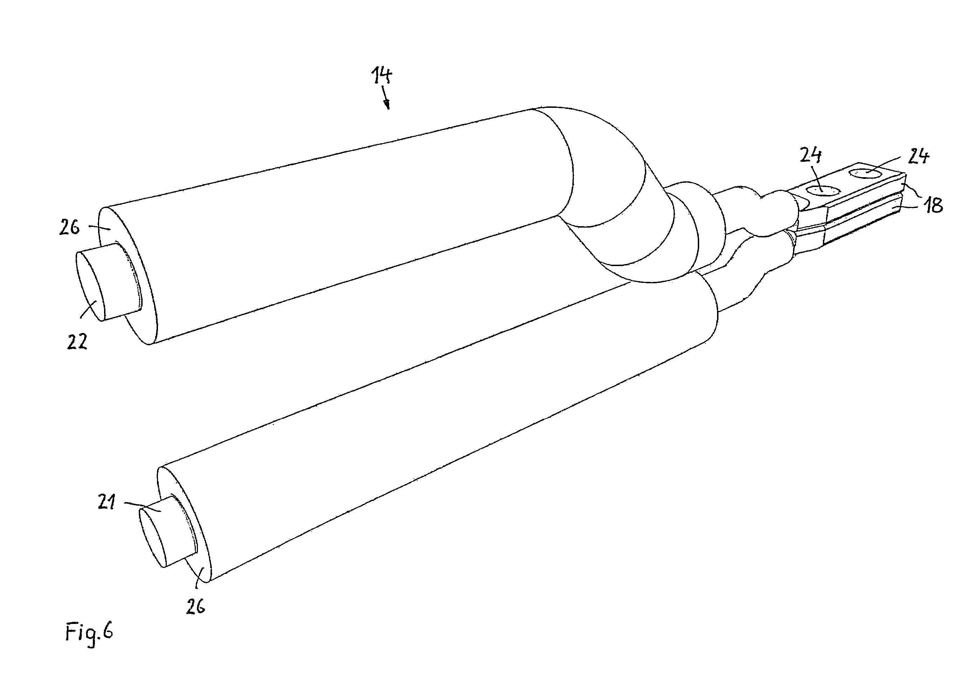

Sollte mit der Ausführungsform gemäß Fig. 5 keine mindestens 30 % große Überdeckung des kleinsten lichten Querschnitts des unterschlächtigen Förderkanals 9.1 erreicht werden können, könnte ein dritter Stab hinzugefügt werden. Eine Vergrößerung des Förderquerschnitts kann aber auch dadurch erreicht werden, dass die beiden Stäbe 21, 22 eine konzentrische Ummantelung 26 erhalten, wie in Fig. 6 dargestellt ist. Diese Ummantelung 26 besteht, wie bei den anderen Ausführungsbeispielen auch, aus einem friktionserhöhenden Material.

In allen Ausführungsbeispielen kann die Ummantelung 19, 23, 26 auf die Stäbe 17, 22, 23 aufvulkanisiert werden, oder es handelt sich bei der Ummantelung 19, 23, 26 um Extrusionsprofile, die auf die Stäbe 17, 21, 22 aufgeschoben und gegebenenfalls stoffschlüssig mit diesen verbunden werden.

## Patentansprüche

1. Schrägförderer (3) für Mähdrescher (1) mit mindestens zwei in einem Förderkanal umlaufenden Zugmitteln (13), wobei die Zugmittel (13) durch quer zur Förderrichtung angeordnete Mitnehmer (14) miteinander verbunden sind, welche das Erntegut in dem unterschlächtigen Förderkanal (9.1) fördern, **dadurch gekennzeichnet, dass** der Förderkanal (9) durch zwischen Obertrum (13.1) und Untertrum (13.2) der Zugmittel (13) angeordnete Trennmittel (15) in einen oberschlächtigen Rücklaufkanal (9.2) und einen unterschlächtigen Förderkanal (9.1) unterteilt ist, und die Mitnehmerleisten (14) zusätzlich zu ihrer Mitnahmeeigenschaft als Beschleunigungselemente für das Erntegut ausgebildet sind, indem der Querschnitt jeder der Mitnehmerleisten (14) in Förderrichtung gesehen mindestens 30 % des kleinsten lichten Querschnitts des unterschlächtigen Förderkanals (9.1) ausfüllt.

2. Schrägförderer nach Anspruch 1, **dadurch gekennzeichnet, dass** die Mitnehmerleisten (14) mindestens einen Stab (17) mit rundem Querschnitt aufweisen, der eine friktionserhöhende Ummantelung (19) besitzt.

3. Schrägförderer nach Anspruch 2, **dadurch gekennzeichnet, dass** die Ummantelung (19) die Form eines etwa senkrecht zur Förderebene stehenden Flügels aufweist.

4. Schrägförderer nach Anspruch 1, **dadurch gekennzeichnet, dass** die Mitnehmerleisten (14) mindestens zwei übereinander angeordnete Stäbe (21, 22) mit rundem Querschnitt aufweisen, die als Einzelstäbe an den Zugmitteln (13) befestigt sind.

5. Schrägförderer nach Anspruch 4, **dadurch gekennzeichnet, dass** die Stäbe (21, 22) einer Mitnehmerleiste (14) eine gemeinsame Befestigungsstelle an den Zugmitteln (13) haben.

6. Schrägförderer nach einem der vorstehenden Ansprüche 4 und 5, **dadurch gekennzeichnet, dass** die Stäbe (21, 22) mit einer friktionserhöhenden Ummantelung (23, 26) versehen sind.

7. Schrägförderer nach Anspruch 6, **dadurch gekennzeichnet, dass** die Ummantelung (26) konzentrisch zu den Stäben (21,22) angeordnet ist.

8. Schrägförderer nach Anspruch 6, **dadurch gekennzeichnet, dass** die mindestens zwei Stäbe (21, 22) eine gemeinsame Ummantelung (23) in Form eines etwa senkrecht zu der Förderebene stehenden Flügels haben.

9. Schrägförderer nach einem der Ansprüche 2 bis 8, **dadurch gekennzeichnet, dass** die Ummantelung (19, 23, 26) durch Stoffschluss oder Vulkanisation mit dem mindestens einen Stab (17, 21, 22) verbunden ist.

10. Schrägförderer nach einem der vorstehenden Ansprüche 2 bis 9, **dadurch gekennzeichnet, dass** die Stäbe (17, 21, 22) aus kaltgezogenem oder warmgewalztem und vergütetem Draht hergestellt sind.

11. Schrägförderer nach einem der vorstehenden Ansprüche 2 bis 9, **dadurch gekennzeichnet, dass** die Stäbe (17, 21, 22) hohl sind.

12. Schrägförderer nach einem der vorstehenden Ansprüche 2 bis 9 und 11, **dadurch gekennzeichnet, dass** die Stäbe (17, 21, 22) ganz oder teilweise aus einem Faserverbundwerkstoff hergestellt sind.

## Claims

1. Inclined conveyor (3) for a combine harvester (1), having at least two traction means (13) which circulate within a conveying channel, wherein said traction means (13) are connected to one another by entraining arrangements (14) which are arranged transversely to the direction of conveyance and which convey the harvested material in the undershot conveying channel (9.1),
**characterised in that**
the conveying channel (9) is subdivided into an overshot return channel (9.2) and an undershot conveying channel (9.1) by separating means (15) arranged between the upper strand (13.1) and the lower strand (13.2) of the traction means (13), and
the entraining strips (14), in addition to their entraining property, are designed as accelerating elements for the harvested material, through the fact that the cross-section of each of the entraining strips (14), viewed in the direction of conveyance, fills up at least 30% of the smallest clear cross-section of the undershot conveying channel (9.1).

2. Inclined conveyor according to Claim 1,
**characterised in that**
the entraining strips (14) have at least one bar (17) with a round cross-section, which possesses a friction-increasing sheath (19).

3. Inclined conveyor according to Claim 2,
**characterised in that**
the sheath (19) has the shape of a vane which extends approximately perpendicularly to the plane of conveyance.

4. Inclined conveyor according to Claim 1,
**characterised in that**
the entraining strips (14) have at least two bars (21, 22) with a round cross-section which are arranged one above another and are fastened to the traction means (13) as individual bars.

5. Inclined conveyor according to Claim 4,
**characterised in that**
the bars (21, 22) of an entraining strip (14) have a common fastening point on the traction means (13).

6. Inclined conveyor according to either of the preceding Claims 4 and 5,
**characterised in that**
the bars (21, 22) are provided with a friction-increasing sheath (23, 26).

7. Inclined conveyor according to Claim 6,
**characterised in that**
the sheath (26) is arranged concentrically with the bars (21, 22).

8. Inclined conveyor according to Claim 6,
**characterised in that**
the at least two bars (21, 22) have a common sheath (23) in the form of a vane which extends approximately perpendicularly to the plane of conveyance.

9. Inclined conveyor according to one of Claims 2 to 8,
**characterised in that**
the sheath (19, 23, 26) is connected to the at least one bar (17, 21, 22) by material bonding or vulcanisation.

10. Inclined conveyor according to one of the preceding Claims 2 to 9,
**characterised in that**
the bars (17, 21, 22) are manufactured from cold-drawn or hot-rolled and heat-treated wire.

11. Inclined conveyor according to one of the preceding Claims 2 to 9,
**characterised in that**
the bars (17, 21, 22) are hollow.

12. Inclined conveyor according to one of the preceding Claims 2 to 9 and 11,
**characterised in that**
the bars (17, 21, 22) are manufactured wholly or partly from a fibre composite material.

## Revendications

1. Convoyeur incliné (3) pour moissonneuses-batteuses (1)
avec au moins deux moyens de traction (13) circulant en boucle fermée dans un canal de convoyage, les moyens de traction (13) étant reliés entre eux par des éléments entraîneurs (14) disposés transversalement au sens de convoyage, éléments entraîneurs, qui transportent les produits de la récolte dans le canal de convoyage (9.1) inférieur, **caractérisé en ce que** le canal de convoyage (9) est divisé par des moyens séparateurs (15), disposés entre le brin supérieur (13.1) et le brin inférieur (13.2) des moyens de traction (13) en un canal de retour supérieur (9.2) et un canal de convoyage (9.1) inférieur et **en ce que** les barres d'entraînement (14) sont, en plus de leur propriété d'entraînement, conçues comme éléments d'accélération pour les produits de la récolte, étant donné que la section transversale, vue dans le sens de convoyage, de chacune des barres d'entraînement (14) remplit au moins 30% de la section transversale libre la plus petite du canal de convoyage inférieur (9.1).

2. Convoyeur incliné suivant la revendication 1, **caractérisé en ce que** les barres d'entraînement (14) présentent au moins une tige (17) de section transversale ronde, qui est pourvue une gaine augmentant la friction (19).

3. Convoyeur incliné suivant la revendication 2, **caractérisé en ce que** la gaine (19) présente la forme d'une ailette à peu près perpendiculaire au plan de convoyage.

4. Convoyeur incliné suivant la revendication 1, **caractérisé en ce que** les barres d'entraînement (14) présentent au moins deux tiges (21, 22) de section transversale ronde, qui sont disposées l'une au-dessus de l'autre et fixées comme tiges individuelles sur les moyens de traction (13).

5. Convoyeur incliné suivant la revendication 4, **caractérisé en ce que** les tiges (21, 22) d'une barre d'entraînement (14) possèdent un emplacement de fixation commun sur les moyens de traction (13).

6. Convoyeur incliné suivant les revendications 4 et 5, **caractérisé en ce que** les tiges (21, 22) sont pourvues d'une gaine augmentant la friction (23, 26).

7. Convoyeur incliné suivant la revendication 6, **caractérisé en ce que** la gaine (26) est disposée de façon concentrique par rapport aux tiges (21, 22).

8. Convoyeur incliné suivant la revendication 6, **caractérisé en ce que** les au moins deux tiges (21, 22) sont pourvues d'une gaine commune (23) en forme d'ailette à peu près perpendiculaire au plan de convoyage.

9. Convoyeur incliné suivant une des revendications 2 à 8, **caractérisé en ce que** la gaine (19, 23, 26) est reliée à l'au moins une tige (17, 21, 22) par adhérence des matières ou vulcanisation avec l'au moins une tige (17, 21, 22).

10. Convoyeur incliné suivant une des revendications précédentes 2 à 9, **caractérisé en ce que** les tiges 17, 21, 22) sont fabriquées en fil tréfilé à froid ou laminé à chaud et trempé et revenu.

11. Convoyeur incliné suivant une des revendications 2 à 9, **caractérisé en ce que** les tiges (17, 21, 22) sont creuses.

12. Convoyeur incliné suivant une des revendications précédentes 2 à 9 et 11, **caractérisé en ce que** les tiges (17, 21, 22) sont fabriquées entièrement ou partiellement en un matériau composite renforcé aux fibres.
